# EUROPEAN PATENT SPECIFICATION

(11) **EP 0 716 963 B1**
(45) Date of publication and mention of the grant of the patent: **06.05.1999**
(21) Application number: 95119883.7
(22) Date of filing: 15.12.1995
(51) Int. Cl.: B60R 22/20, B60R 22/22

(54) **Device for anchoring one end of a motor vehicle seat belt**
Vorrichtung zum Verankern eines Kraftfahrzeug-Sicherheitsgurtendes
Dispositif d'ancrage d'une extrémité de ceinture de sécurité de véhicule automobile

(30) Priority: 16.12.1994 IT TO941026
(43) Date of publication of application: 19.06.1996
(73) Proprietor: FIAT AUTO S.p.A., 10135 Torino (IT)
(72) Inventor: Richiardi, Silvio, I-10121 Torino (IT)
(74) Representative: Plebani, Rinaldo

(56) References cited:
- EP-A- 0 098 458
- DE-A- 3 539 051
- FR-A- 2 595 300
- PATENT ABSTRACTS OF JAPAN vol. 003 no. 084 (M-066) ,20 July 1979 & JP-A-54 059722 (TOYOTA JIDOSHA KOGYO K.K.) 14 May 1979,

## Description

The present invention relates to a device for anchoring one end of a motor vehicle front seat belt, by means of which it is possible to position this end where desired relative to the bodywork, especially for gaining easy access to the rear seats in cars with front doors only.

As is known, the end of a seat belt for a front seat of a motor vehicle is normally anchored permanently to the bodywork at a point positioned behind this seat. Such a mounting presents a number of drawbacks.

In the first place, the position of the point of attachment of this end of the belt may not be the most suitable for certain positions of the seat, in some of which the angle of the portion of belt running between the point of attachment and where it passes around the body of the passenger may not be the most suitable for it to pass properly around the body and for proper transmission of the forces along this belt portion when the belt is under working conditions. Moreover, the point of attachment of this end may present an obstacle to easy access to the rear seats of the vehicle, especially in cars with front doors only.

These problems are partially solved by EP-A-0098458 wherein the seat belt is anchored to an element rigid with the seat and in sliding connection with a cable anchored to the bodywork of the vehicle. Anyway, this solution, thus allowing adjustment of the axial position of the seat belt anchoring, does not allow easy access to the car seats in a vehicle with front doors only.

The object of the present invention is to provide a device for anchoring one end of a motor vehicle seat belt, by means of which these drawbacks are eliminated and which makes it possible, therefore, to move the anchoring point of this end to the bodywork, within a range of predetermined values.

This object is achieved by means of a device for anchoring one end of a motor vehicle seat belt, as claimed in Claim 1.

In order to assist with understanding the structure and modes of operation of the device of the present invention, a more detailed description will now be given, by way of example, with reference to the figures of the attached drawings, in which:
Figure 1 is a perspective view of the anchoring device of the invention;
Figure 2 is a side view of the same; and
Figure 3 is a vertical section on the cutting plane III-III.

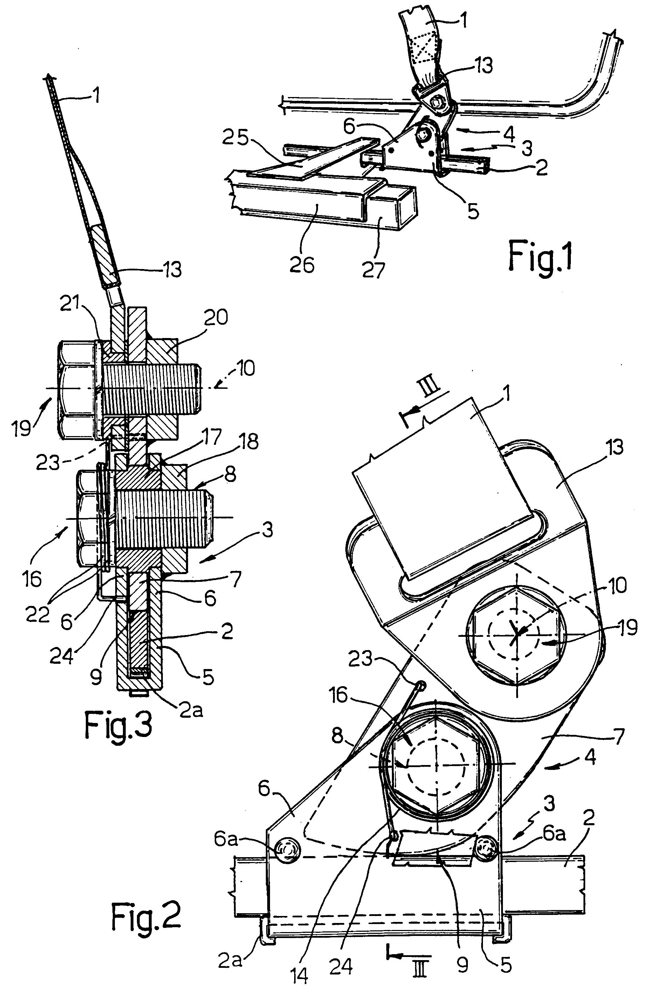

The device is for anchoring the end of the seat belt of a front seat of a motor vehicle (these are normally anchored to the floor of the motor vehicle in the case of front belts), which in Figure 1 bears the reference 1.

The device comprises an essentially axial rail 2 formed by a rigid bar anchored to the bodywork of the vehicle, a runner 3 connected to the end 1 of the belt and provided with constraint means, marked 4 as a whole, designed to allow the runner to move longitudinally relative to the rail and to prevent the runner from separating from the rail under the action of the forces which act on the end 1 of the belt under normal working conditions. Advantageously, these constraint means may basically be formed (as in the case of the embodiment illustrated in the drawings) by a channel-shaped part 5 connected in a sliding manner to the rail 2, and this rail 2 may advantageously be formed by a prismatic bar. Advantageously, the runner 3 is made from a metal plate bent into an approximate U, which gives a pair of wings 6 held apart by rivets each having a distance piece 6a; between the U part and the rail 2 is a sliding strip 2a.

The device also comprises a jamming member 7 connected by a hinge 8 to the runner 3 and provided with an active surface 9 (Figure 2) designed to press on the outer surface of the rail 2 and at least one spring 14 interposed between the runner 3 and the jamming member 7. The action of the spring 14, the shape of the active surface 9 and the position of the axis of the hinge 8 are designed such that when the runner 3 runs along the rail 2 in normal belt-moving operations, the jamming member 7 is held in a rotated position in order that the active surface 9 is held off the surface of the rail 2 and that when the force applied to the end of the belt 1 overcomes the opposition of the spring 14, in a first direction of movement of the runner 3 relative to the rail 2 (movement towards the left in Figure 2), it turns the jamming member and jams this active surface against the surface of the rail, and thus prevents the runner from moving relative to the rail in this first direction; whereas when the runner moves in the opposite direction to the aforesaid direction this movement is always permitted (movement of the runner towards the right in Figure 2).

The end 1 of the belt is preferably hinged to the jamming member 7 at a point 10 which, relative to the hinge 8, is on the opposite end from the active surface 9 of the jamming member 7, so that the forces acting on the end 1 in the working conditions of the belt turn the jamming member 7, in the anticlockwise direction in Figure 2, bringing the active surface 9 into contact with the surface of the rail 2. The end 1 of the belt is advantageously anchored to an attachment member 13 which in turn is hinged at the point 10 to the jamming member 7, as can be clearly seen in Figure 2.

Furthermore, at least one spring 14 is interposed between the runner 3 and the jamming member 7 and is designed to keep the jamming member turned clockwise as seen in Figure 2, in a position in which the active surface 9 is not in contact with the surface of the rail 2.

The jamming member 7 is advantageously in the form of a plate, as is clearly visible in Figure 2, and the active surface 9 of this member is formed by a shaped surface of the plate itself; this plate is also positioned between the two wings 6 of the runner 3 (Fig. 3). Advantageously, as has been shown in Figure 3, the jamming member 7 is hinged to the runner 3 by means of a nut and bolt 16 passing through corresponding holes in the wings 6 and in this member; furthermore, a bush 17 is positioned between the shank of the bolt and the jamming member 7 and the nut 18 on this bolt is welded to one of the wings 6. Likewise the attachment member 13 at the end of the belt 1 is in the form of a plate and is hinged to the jamming member 7 by another nut and bolt 19, which passes through corresponding holes in these members; the nut 20 on this bolt is welded to the jamming member 7 and another bush 21 is fitted between the shank of this bolt and the hole of the attachment member 13.

The spring 14 is advantageously a helical spring working in torsion, whose turns 22 (Fig. 3) are positioned around the head of the bolt 16 and whose ends are fixed, one, 23, to the jamming member 7 and the other, 24, to one wing 6 of the runner 3.

As an essential feature of the invention, the seat equipped with the described device is supported by a runner 26 able to move along a corresponding rail 27, which is independent of rail 2 and parallel thereto. Advantageously forming part of the invention is also a connecting part 25 (Fig. 1) designed to determine, when the belt is fitted around the user, the position of the runner 3 relative to the seat in order to obtain the correct configuration of the belt for every position of this seat; this connecting part 25 can be seen in Figure 1 and consists basically of an arm anchored to runner 26 connected to the seat and able to move along the corresponding rail 27.

The device described works in the following manner.

When runner 26 is moved frontwards for accessing the rear seats, also the runner 3 can be moved by hand along the corresponding rail 2 to put it in a predetermined position where it will not be an obstruction, for example to a passenger getting into the rear seat of a motor vehicle. Such movement is possible in either direction along the rail because, in the rest position, the spring 14 keeps the jamming member rotated so that the active surface 9 of the member 7 is kept off the corresponding outer surface of the rail 2. Consequently the resisting force generated by the movement of the runner depends only on the friction in the connection between the strip 2a and the rail, which is obviously very low. Moreover, if the device is provided with the connecting part 25 (Figure 1), the runner 3 can be moved frontwards (towards the left in Figure 2) till against part 25 and to the position of easy access to the rear seats, in the case of for example cars with only front doors (towards the right in Figure 2), in whatever position the front seat is placed, and may optionally have an auxiliary spring return system. When the front seat is returned in its normal position part 25 automatically brings runner 3 to the correct belt-wearing position.

If the belt is being worn by the occupant and its end 1 is subject to a force produced by, for example, a sudden forward movement of the occupant which must be restrained by the belt, this force is transmitted through the attachment member 13 to the jamming member 7 and acts on the point 10 where the member 13 is hinged to the member 7. This force therefore turns the jamming member 7 anticlockwise in Figure 2, overcoming the elastic resistance of the spring 14 and consequently bringing the active surface 9 of the jamming member against the surface of the rail 2.

Because of the shape of this surface and the position of the axis of the hinge 8, the consequence is that, whatever force is applied by the end of the belt 1, the jamming of the active surface 9 of the jamming member 7 against the surface of the rail 2 generates a reaction whose component in the direction of the rail 2 prevents the runner 3 from moving along the rail towards the left of Figure 2.

## Claims

1. Device for anchoring one end (1) of a motor vehicle front seat belt, comprising:
an essentially axial rail (2) anchored to the bodywork of the vehicle, characterized in that
a runner (3) connected to said end of the belt and provided with constraint means (4) is designed to allow the runner to move longitudinally relative to the rail and to prevent the runner from separating from the rail under the action of the forces which normally act on said end of the belt in the working conditions of the belt;
a jamming member (7) hinged (8) to said runner (3) and provided with an active surface (9) designed to press on one of the surfaces of said rail (2);
an opposing spring (14) inserted between said runner (3) and said jamming member (7), the action of said spring (14), the shape of said active surface (9) and the position of the axis of said hinge (8) being designed such that when the runner runs along the rail (2) in normal belt-moving operations, said jamming member (7) is held in a rotated position in order that said active surface (9) is held off said surface of the rail (2) and that when the force applied to the end of the belt (1) overcomes the opposition of the spring (14) in a first direction of movement of the runner relative to the rail (2), it turns said jamming member (7) and jams said active surface (9) against said surface of the rail (2), thus preventing the runner (3) from moving relative to the rail (2) in said first direction, whereas when said runner (3) moves along said rail in a second direction opposite to the first, this movement is always permitted;
and in that said axial rail (2) is independent of an anchoring rail (27) for the front seat.

2. Device according to Claim 1, characterized in that said end (1) of the belt is hinged to said jamming member (7) at a point (10) which, relative to said hinge (8), is on the opposite end from said active surface (9) of the jamming member (7), so that said forces acting on said end (1) turn said jamming member (7), bringing said active surface (9) into contact with said surface of the rail.

3. Device according to Claim 2, characterized in that said end (1) of the belt is anchored to an attachment member (13) which in turn is hinged to said jamming member (7) at said point (10).

4. Device according to one of the previous claims, characterized in that it comprises a connecting part (25) for positioning said runner (3) relative to a seat of the vehicle in order to obtain the correct position of the belt for every position of the seat.

5. Device according to one of the previous claims, characterized in that said runner (3) comprises a channel-shaped part (5), inside which said rail (2) is held and slides and which is provided with at least one wing (6) to which said jamming member (7) is hinged.

6. Device according to one of the previous claims, characterized in that said jamming member (7) is in the form of a plate, said active surface (9) being formed by a shaped edge of said plate.

7. Device according to one of the previous claims, characterized in that said runner (3) is formed by a metal plate bent into an approximate U to give said tubular part (5) and a pair of wings (6), said plate (7) being arranged between said two wings (6) and being hinged to them by a first nut and bolt (16).

8. Device according to one of the previous claims, characterized in that said member (13) for attaching the end (1) of the belt is hinged to said plate (7) by a second nut and bolt (19).

9. Device according to one of the previous claims, characterized in that said spring (14) is a helical spring working in torsion, whose turns (22) are positioned around the head of said first bolt (16) and whose ends (23, 24) are fixed, one to said jamming member (7) and the other to said wing (6).

## Patentansprüche

1. Vorrichtung zum Verankern eines Endes (1) eines Kraftfahrzeugvordersitz-Sicherheitsgurtes, mit :
einer im wesentlichen axialen Schiene (2), die an der Karosserie des Fahrzeugs verankert ist, gekennzeichnet durch
einen Läufer, der mit dem Ende des Sicherheitsgurtes verbunden und mit einer Begrenzungseinrichung (4) versehen ist, die so beschaffen ist, daß sie dem Läufer eine longitudinale Bewegung relativ zur Schiene ermöglicht und verhindert, daß der Läufer von der Schiene unter der Wirkung der Kräfte, die unter den Arbeitsbedingungen normalerweise auf das Ende des Sicherheitsgurtes des Sicherheitsgurtes wirken, abgelöst wird;
ein Klemmelement (7), das mit dem Läufer (3) gelenkig verbunden (8) und mit einer aktiven Oberfläche (9) versehen ist, die so beschaffen ist, daß sie auf eine der Oberflächen der Schiene (2) drückt;
eine Vorbelastungsfeder (14), die zwischen den Läufer (3) und das Klemmelement (7) eingesetzt ist, wobei die Wirkung der Feder (14), die Form der aktiven Oberfläche (9) sowie die Position der Achse des Gelenks (8) so beschaffen sind, daß das Klemmelement (7) dann, wenn der Läufer längs der Schiene (2) in normalen Sicherheitsgurt-Bewegungsoperationen läuft, in einer gedrehten Stellung gehalten wird, damit die aktive Oberfläche (9) in einem Abstand von der Oberfläche der Schiene (2) gehalten wird, und daß jene Wirkung dann, wenn die auf das Ende des Sicherheitsgurts (1) ausgeübte Kraft die Vorbelastungskraft der Feder (14) in einer ersten Bewegungsrichtung des Läufers relativ zur Schiene (2) übersteigt, das Klemmelement (7) dreht und die aktive Oberfläche (9) gegen die Oberfläche der Schiene (2) drückt, um eine Bewegung des Läufers (3) relativ zur Schiene (2) in der ersten Richtung zu verhindern, während diese Bewegung dann, wenn sich der Läufer (3) längs der Schiene in einer zweiten Richtung, die zur ersten entgegengesetzt ist, bewegt, stets zugelassen ist;
und dadurch, daß die axiale Schiene (2) von einer Verankerungsschiene (27) des Vordersitzes unabhängig ist.

2. Vorrichtung nach Anspruch 1, dadurch gekennzeichnet, daß das Ende (1) des Sicherheitsgurtes am Klemmelement (7) an einem Punkt (10) angelenkt ist, der sich relativ zum Gelenk (8) am gegenüberliegenden Ende der aktiven Oberfläche (9) des Hemmelements (7) befindet, so daß die, auf das Ende (1) wirkenden Kräfte das Klemmelement (7) drehen und die aktive Oberfläche (9) mit der Oberfläche der Schiene in Kontakt bringen.

3. Vorrichtung nach Anspruch 2, dadurch gekennzeichnet, daß das Ende (1) des Sicherheitsgurtes an einem Befestigungselement (13) verankert ist, das seinerseits am Klemmelement (7) an jenem Punkt (10) angelenkt ist.

4. Vorrichtung nach irgendeinem der vorangehenden Ansprüche, dadurch gekennzeichnet, daß sie ein Verbindungsteil (25) zum Positionieren des Läufers (3) relativ zu einem Sitz des Fahrzeugs enthält, um die korrekte Position des Sicherheitsgurtes für jede Position des Sitzes zu erhalten.

5. Vorrichtung nach irgendeinem der vorangehenden Ansprüche, dadurch gekennzeichnet, daß der Läufer (3) ein kanalförmiges Teil (5) enthält, in dem die Schiene (2) gehalten wird und gleitet und das mit wenigstens einem Flügel (6) versehen ist, an dem das Klemmelement (7) angelenkt ist.

6. Vorrichtung nach irgendeinem der vorangehenden Ansprüche, dadurch gekennzeichnet, daß das Klemmelement (7) die Form einer Platte besitzt, wobei die aktive Oberfläche (9) durch eine geformte Kante der Platte gebildet ist.

7. Vorrichtung nach irgendeinem der vorangehenden Ansprüche, dadurch gekennzeichnet, daß der Läufer (3) durch eine Metallplatte gebildet ist, die in eine geeignete U-Form gebogen ist, um den röhrenförmigen Teil (5) und ein Paar Flügel (6) zu ergeben, wobei die Platte (7) zwischen den beiden Flügeln (6) angeordnet und an ihnen durch eine erste Schrauben/Mutter-Einheit (16) angelenkt ist.

8. Vorrichtung nach irgendeinem der vorangehenden Ansprüche, dadurch gekennzeichnet, daß das Element (13) zum Befestigen des Endes (1) des Sicherheitsgurtes an der Platte (7) durch eine zweite Schrauben/Mutter-Einheit (19) angelenkt ist.

9. Vorrichtung nach irgendeinem der vorangehenden Ansprüche, dadurch gekennzeichnet, daß die Feder (14) eine Torsionsschraubenfeder ist, deren Windungen (22) um den Kopf der ersten Schraube (16) angeordnet sind und deren Enden (23, 24) am Klemmelement (7) bzw. am Flügel (6) befestigt sind.

## Revendications

1. Dispositif d'ancrage d'une extrémité (1) d'une ceinture de sécurité de siège avant d'un véhicule automobile, comprenant :
un rail sensiblement axial (2) ancré à la carrosserie du véhicule,
caractérisé en ce que :
un curseur (3) connecté à la dite extrémité de la ceinture et pourvu d'un moyen de retenue (4) est conçu pour permettre le déplacement longitudinal du curseur par rapport au rail et pour empêcher le curseur de se séparer du rail sous l'action des forces qui agissent normalement sur la dite extrémité de la ceinture dans les conditions de travail de la ceinture ;
un élément de coincement (7) est fixé par un pivot (8) au dit (3) et il présente une surface active (9) conçue pour exercer une pression sur une des surfaces du dit rail (2) ;
un ressort antagoniste (14) est inséré entre le dit curseur (3) et le dit élément de coincement (7) , l'action du dit ressort (14), la forme de la dite surface active (9) et la position de l'axe du dit pivot (8) étant prévues de sorte que, lorsque le curseur se déplace le long du rail (2) dans des opérations de déplacement normal de la ceinture, le dit élément de coincement (7) est maintenu dans une position tournée afin que la dite surface active (9) reste dégagée de la dite surface du rail (2) et de sorte que, 1 sque la force appliquée à l'extrémité de la ceinture (1) peut vaincre l'opposition du ressort (14) dans une première direction de mouvement du curseur par rapport au rail (2), elle fait tourner le dit élément de coincement (7) et bloque la dite surface active (9) contre la dite surface du rail (2), ce qui empêche le curseur (3) de se déplacer par rapport au rail (2) dans la dite première direction, tandis que, lorsque le dit curseur (3) se déplace le long du dit rail dans une deuxième direction opposée à la première, ce mouvement est toujours permis ;
et en ce que le dit rail axial (2) est indépendant d'un rail d'ancrage (27) du siège avant.

2. Dispositif selon la revendication 1, caractérisé en ce que la dite extrémité (1) de la ceinture est articulée sur le dit élément de coincement (7) à un point (10) qui se trouve, par rapport au dit pivot (8), à l'extrémité opposée à la dite surface active (9) de l'élément de coincement (7), de sorte que les dites forces agissant sur la dite extrémité (1) font tourner le dit élément de coincement (7), ce qui amène la dite surface active (9) en contact avec la dite surface du rail.

3. Dispositif selon la revendication 2, caractérisé en ce que la dite extrémité (1) de la ceinture est ancrée à un élément d'attache (13) qui est lui-même articulé sur le dit élément de coincement (7) à l'endroit du dit point (10).

4. Dispositif selon une des revendications précédentes, caractérisé en ce qu'il comprend une pièce de liaison (25) pour positionner le dit curseur (3) par rapport à siège du véhicule , afin d'obtenir la position correcte de la ceinture pour toute position du siège.

5. Dispositif selon une des revendications précédentes, caractérisé en ce que le dit curseur (3) comprend une partie en forme de U (5) à l'intérieur de laquelle le dit rail (2) est retenu et coulisse, et comporte au moins une aile (6) à laquelle le dit élément de coincement (7) est fixé de façon pivotante.

6. Dispositif selon une des revendications précédentes, caractérisé en ce que le dit élément de coincement (7) est sous la forme d'une plaque, la dite surface active (9) étant formée par un bord profilé de la dite plaque.

7. Dispositif selon une des revendications précédentes, caractérisé en ce que le dit curseur (3) est constitué par une plaque métallique pliée sensiblement en forme de U pour définir la dite partie tubulaire (5) et deux ailes (6), la dite plaque (7) étant disposée entre les dites deux ailes (6) et étant fixée de façon pivotante à celles-ci par un premier ensemble à vis et écrou (16).

8. Dispositif selon une des revendications précédentes, caractérisé en ce que le dit élément (13) d'attache de l'extrémité (1) de la ceinture est fixé de façon pivotante à la dite plaque (7) par un deuxième ensemble à vis et écrou (19).

9. Dispositif selon une des revendications précédentes, caractérisé en ce que le dit ressort (14) est un ressort hélicoïdal travaillant en torsion, dont les spires (22) sont disposées autour de la tête de la première vis (16) et dont les extrémités (23, 24) sont fixées l'une au dit élément de coincement (7) et l'autre à la dite aile (6).
